# EUROPÄISCHE PATENTANMELDUNG

(11) **EP 2 533 022 A1**
(43) Veröffentlichungstag der Anmeldung: **12.12.2012**
(21) Anmeldenummer: 11169504.5
(22) Anmeldetag: 10.06.2011
(51) Int. Cl.: G01D 21/02, G01D 5/244

(54) **Hochpräzise synchronisierte Messwerterfassung**

(71) Anmelder: Hexagon Technology Center GmbH, 9435 Heerbrugg (CH)
(72) Erfinder: Fritsch, Robert, 9436 Balgach (CH)
(74) Vertreter: Gyaja, Christoph Benjamin

(57) **Zusammenfassung**

Ein Verfahren zur hochpräzisen zeitlichen Synchronisierung von Messwerterfassungen in einem Messsystem mit mehreren Teilmesseinheiten mit Signalisieren eines Zeitpunkts zur Auslösung der Messwerterfassung durch ein Triggersignal und jeweiliges Erfassen und Zwischenspeichern eines Messwerts in der Teilmesseinheit zu dem durch das Triggersignal bestimmten Zeitpunkt.
Dabei wird das Erfassen des Messwerts, in den Teilmesseinheiten jeweils zeitquantifiziert mit einem lokalen Taktsignal der Teilmesseinheit durchgeführt.
Es erfolgt ein Synchronisieren der lokalen Taktsignale der Teilmesseinheiten, insbesondere ein Phasen-Synchronisieren, durch ein Synchronisationssignal zur Sicherstellung einer Gleichzeitigkeit des Erfassens des Messwerts in den Teilmesseinheiten mit einer zeitlichen Unsicherheit, welche einen Phasen-Jittern des Synchronisierens nicht übersteigt und jedenfalls geringer als 90 % einer Periodendauer des lokalen Taktsignals ist.

## Beschreibung

Die Erfindung betrifft ein Verfahren zur zeitlichen Synchronisierung von Messwerterfassungen in einem Messsystem mit mehreren Teilmesseinheiten nach dem Oberbegriff des Anspruchs 1 sowie ein triggerbares Messsystem mit mehreren Teilmesseinheiten nach dem Oberbegriff des Anspruchs 15.

Messsysteme mit verteilten Teilsystemen bei welchen Messwerte möglichst zeitsynchron erfasst werden sollten, sind seit längerer Zeit bekannt und am Markt verbreitet. Zu diesen gehören im Speziellen Koordinatenmesssysteme wie beispielsweise geodätische Instrumente, articulated Arms oder Koordinatenmessmaschinen. Diese weisen meist mehrere Bewegungsachsen auf, welche jeweils mit einem Teilmesssystem zur Erfassung einer Lage der Achse ausgestattet sind. Die Lage kann dabei in Form einer Längen-, Winkel-, oder einer kombinierten Raumlage als Messwert vorliegen. Die Messwerte der einzelnen Teilsysteme können mittels Positionswertgebern verschiedenster Ausführung, beispielsweise mittels Bildverarbeitung, absolut- oder relativcodierten Weg- oder Winkelgebern, analogen Tastköpfen zur Auslenkungsbestimmung oder anderen geeigneten Verfahren bestimmt werden. Ferner können auch Hilfsgrössen wie beispielsweise Geschwindigkeit, Beschleunigung, Temperatur, Luftdruck, Luftfeuchte, Kraft, Abstand bzw. Berührung etc. gemessen und erfasst werden, sowie eine beliebige Kombination von diesen Messwerten.

Hierbei ist es bei hochgenauen Messungen von Bedeutung, sämtliche Messwerte der Teilmesssysteme zu ein und dem selben, genau bestimmten Zeitpunkt zu kennen, um einen konsistenten Satz von Daten zu erhalten. Unterschiedliche Zeitpunkte der Messung in den verschiedenen Teilsystemen können bei einer allfälligen Änderung der zu messenden Werte zwischen diesen Zeitpunkten, beispielsweise durch Bewegung der Achsen, zu inkonsistenten Daten führen. Werden solche inkonsistenten Daten weiterverarbeitet, beispielsweise um daraus Raumkoordinaten zu bestimmen, führt dies zu einer fehlerhaften bzw. ungenauen Gesamtmessung, beispielsweise wenn die exakten Raumkoordinaten eines sich bewegenden Objektes zu einem bestimmten Zeitpunkt bestimmt werden sollen.

Um solche Fehler zu verhindern ist es daher von Bedeutung, bei einer Messung alle Messwerte in den Teilsystemen möglichst exakt zum gleichen Zeitpunkt zu erfassen oder zumindest die jeweiligen Messzeitpunkte genau zu kennen. Ersteres wird in solchen Messsystemen üblicherweise durch ein globales Auslöse- oder Triggersignal realisiert, welches den Zeitpunkt der Messwerterfassung in den Teilmesssystemen bestimmt. Zweiteres erfordert eine entsprechend genaue Kenntnis von allfälligen Verzögerungen zwischen den jeweiligen Messzeitpunkten, wobei dabei die Verzögerungen vorzugsweise deterministisch, also fix oder für die jeweilige Messung bestimmbar, sein müssen.

Dies kann auf verschiedenste Arten geschehen. Häufig wird, wie z.B. aus US 5,657,549 bekannt, zum Zeitpunkt eines Pegelwechsels des Triggersignals bei allen Teilsystemen der aktuelle Messwert erfasst und zwischengespeichert. Die zwischengespeicherten Messwerte können dann, auch zeitlich asynchron zueinander, von einer Steuereinheit ausgelesen werden, beispielsweise unter Verwendung von Bussystemen, Funksignalen oder ähnlichem.

In der Steuereinheit kann dann anhand der Teilmesswerte ein Gesamtmesswert bestimmt werden. In dem aus US 2005/01 66 413 A1 bekannten Messsystem kann beispielsweise die Raumlage eines taktilen Tastkopfes, welcher zum Zeitpunkt des Kontaktes mit einem Werkstück ein Trigger-signal auslöst, aus den Lage-Messwerten der Teilsysteme bestimmt werden.

Das Triggersignal kann dabei in vorgegebenen zeitlichen Abständen oder durch externe Einflüsse ausgelöst werden, wobei das Triggersignal durchaus auch als eine spezielle Form eines Messsignals angesehen werden kann, welches dazu dient den Zeitpunkt der Messwerterfassung im Messsystem zu bestimmen. Solche externen Einflüsse zur Triggerung können z.B. das Schalten taktiler Messtaster, das Durchfahren von Lichtschranken, das Erreichen von Schaltschwellen eines Messwertes in einem Teilsystem, manuelles Auslösen der Messung durch Knopfdruck, automatisches Auslösen der Messung durch eine übergeordnete Steuereinheit, zeitliche Taktgeber, etc. darstellen. Diese auslösenden Ereignisse können unabhängig und somit auch asynchron zu den Taktgebern des Messsystems bzw. dessen Teilsystemen stattfinden.

Eine Vielzahl der heute verfügbaren Messsysteme verfügt über Teilsysteme, welche die Teilmesswerte lokal durch eine Digitalelektronik, beispielsweise einen Mikroprozessor oder ähnlichem, erfassen. Die Taktsignale zur Datenverarbeitung haben dabei eine Frequenz von zumindest mehreren hundert Kilohertz, meist haben die Taktsignale Frequenzen im Bereich von 1 Megahertz bis 4 Gigahertz, häufig im zwei-oder dreistelligen MHz Bereich. Durch die Anordnung dieser Teilsysteme direkt am Ort der jeweiligen Messung, entsteht ein räumlich verteiltes Messsystem. Um den dabei entstehenden Verkabelungsaufwand möglichst gering zu halten, wird daher vielfach eine Datenübertragung mit möglichst wenigen Leitungen angestrebt. Insbesondere, da diese Verbindungen im Messsystem oft über aufwändige und fehleranfällige Schleifkontakte, Schleppkabel und Steckverbindungen sowie oft auch über beträchtliche Leitungslängen geführt werden müssen.

In DE 3 912 162 wird ein Bussystem beschrieben, bei welchem über ein und dieselbe Leitung sowohl die Versorgungsspannung als auch die Kommunikationsdaten eines Teilsystems übertragen werden. Dadurch kann der Verkabelungsaufwand im Messsystem reduziert werden.

In EP 237 680 wird ein Verfahren beschrieben, bei welchem ein globales Triggersignal jeweils auf den lokalen Systemtakt des Teilsystems synchronisiert wird. Jedes der verteilten Teilmesssysteme am Bus arbeitet jedoch mit einem unterschiedlichen lokalen Taktsignal zur Abtastung des Triggersignals, wodurch die lokalen Taktsignale in Phasenlage und Frequenz gegeneinander abweichen können.

Dadurch entsteht in jedem Teilmesssystem zwar ein synchronisiertes, lokales Triggersignal, welches jedoch gegenüber dem empfangenen Triggersignal und jenen der anderen Teilsysteme durchaus zeitlich versetzt sein kann, und somit zu einem unterschiedlichen Zeitpunkt der Messung in den einzelnen Teilmesssystemen führt. Die Zeitunsicherheit kann dabei bis zu einem lokalen Taktzyklus betragen.

Bei digitalen Signalverarbeitungssystemen ist das "einsynchronisieren" von externen, asynchronen Signalen ein gebräuchliches Vorgehen um Fehlfunktionen aufgrund instabiler Schaltzustände oder zu kurzen Signalimpulsen sogenannte "glitches" zu vermeiden. Derartige Eingangsschaltungen zum einlesen externer Signale werden oft durch so genannte "double registered signals" realisiert und gehören zum grundlegenden Einmaleins beim Entwurf digitaler Schaltungen, beispielsweise von FPGA oder ASIC Designs. Dadurch werden interne Signalzustandswechsel während einer Taktperiode vermieden, welche beispielsweise aufgrund ChipInterner Laufzeiten oder Tolleranzen im Schaltverhalten der internen Logikelemente, zu unerwünschten Effekten, einem nichtdeterministischen Verhalten, oder gar verbotenen Schaltzuständen führen können. Zu deren Vermeidung werden auch die damit schaltungstechnisch verbundenen SignalVerzögerungen in kauf genommen, zumal deren Dauer, zumindest in Taktzyklus-Einheiten bekannt ist, was Möglichkeiten einer allfälligen Kompensation allfälliger, der daraus resultierender negativer Effekte ermöglicht. Eine Unsicherheit im Bereich von einer Taktzykluszeit bleibt jedoch selbst dann immer vorhanden, da der exakte Zeitpunkt des Signalwechsels zwischen zwei Taktperioden unbekannt bleibt.

Beispielsweise kann auch das jeweilige Teilsystemen oder Messmodul einen internen Zeitstempel zur Messung vergeben, abspeichern und gemeinsam mit dem Messwert übermitteln. Dadurch können, bspw. durch Glitches verursachte, Verzögerungen erkannt und gegebenenfalls kompensiert werden. Bei synchronisierten Uhren für die Zeitstempel in allen Messmodulen kann anhand eines geringfügig abweichenden Zeitstempels eine Verzögerung erkannt werden und - beispielsweise durch einen Mehrheitsentscheid - der wahrscheinlichste Zeitstempel der Messanforderung ermittelt werden.

Zur Erläuterung sind beispielsweise zwei unsynchronisierte lokale Taktsignale, ein erstes und ein zweites lokales Taktsignal, in einem oder in mehreren digitalen Systemen (casu quo als Teilmesssysteme) vorhanden, etwa in Form von zwei durch unabhängige, freilaufende Quarz-Taktgeber erzeugte Taktsignale. Ein externes Signal (casu quo als Triggersignal), wird jeweils mit dem entsprechenden ersten und zweiten lokalen Taktsignal einsynchronisiert. Die beiden resultierenden einsynchronisierten Repräsentationen des externen Signals können - selbst bei gleichem Wert der lokalen Taktfrequenz - nunmehr zeitlich um bis zu eine Taktperiode voneinander abweichen. Die beiden resultierenden, zur weiteren Verarbeitung synchronisierten internen Triggersignale können somit eine zeitliche Unsicherheit von bis zu einer Taktperiode gegeneinander aufweisen, obwohl diese aus demselben externen Signal und gegebenenfalls auch mit einem Taktsignal derselben Periodendauer generiert wurde. Folglich kann im ersten und zweiten Teilmesssystem der Auslösezeitpunkt der Messung trotz einer eindeutigen Triggerung mit demselben Triggersignal abweichend sein. Der daraus resultierende Fehler mag in manchen Fällen, insbesondere bei entsprechend hoch gewählten Taktraten, vernachlässigbar klein erscheinen, dennoch kann dieser sich bei hohen Genauigkeitsanforderungen negativ bemerkbar machen und eine nichtdeterministische Fehlerquelle darstellen. Hohe Taktraten in digitalen Systemen gehen zudem mit den Nachteilen einer höheren Verlustleistung und meist auch einem aufwändigeren Schaltungsdesign einher.

Die Aufgabe der vorliegenden Erfindung ist daher eine Verbesserung eines Messsystems, insbesondere eines Meßsystems mit mehreren Messwertaufnehmern als Teilmesssystemen.

Eine spezifische Aufgabe ist die Zeitunsicherheit der Teilsysteme zu verringern um entweder überall möglichst gleichzeitig zu messen, oder wenigstens die jeweiligen Messzeitpunkte möglichst genau zu kennen.

Eine weitere Aufgabe dabei ist es, diese Synchronisation der Messwerterfassung bei gleich bleibendem oder gar verringertem Verkabelungsaufwand zu erreichen.

Es ist auch eine Aufgabe eine Verringerung der Komplexität der Teilsysteme zu erreichen, wobei unter anderem möglichst wenige Bauteile verwendet werden sollen, um Baugröße und Kosten gering zu halten.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die zuvor dargestellte Aufgabenstellung wird erfindungsgemäß gelöst, indem neben dem Triggersignal zusätzlich auch ein Synchronisationssignal übertragen wird, auf welches die jeweils lokalen Taktsignale der jeweiligen Teilsysteme Phasen-Synchronisiert werden.

Somit kann eine Phasen-Synchronisation der Teilmesssysteme untereinander mit einem zeitlichen Fehler erreicht werden, welcher deutlich geringer als ein Taktzyklus ist. Wird nun das Triggersignal mit diesen synchronisierten Taktsignalen ausgewertet, so ist der zeitliche Versatz des Zeitpunktes der Erfassung des Messwertes zwischen den Teilsystemen systembedingt deutlich geringer als ein Taktzyklus. Der Versatz liegt nunmehr in der Größenordnung der Synchronisationsgenauigkeit der Taktsignale, welche Genauigkeiten von deutlich unter einer Periodendauer des Taktsignals erreicht, meist um mehrere Zehnerpotenzen genauer. Somit weisen die jeweiligen Messungen zueinander eine zeitliche Unsicherheit auf, welche einen Phasen-Jitter der Phasen-Synchronisation der Taktsignale nicht übersteigt.

Erfindungsgemäß wird dies durch das hier beschriebene Verfahren zur hochpräzisen zeitlichen Synchronisierung von Messwerterfassungen in einem Messsystem mit mehreren, insbesondere räumlich verteilten, Teilmesseinheiten realisiert. Es wird dabei ein Signalisieren eines Zeitpunkts zur Auslösung der Messwerterfassung durch ein Triggersignal und jeweiliges Erfassen und Zwischenspeichern eines Messwerts in der Teilmesseinheit zu dem durch das Triggersignal bestimmten Zeitpunkt durchgeführt, wobei das Erfassen des Messwerts, in den Teilmesseinheiten jeweils zeitquantifiziert mit einem lokalen Taktsignal der Teilmesseinheit geschieht.

Erfindungsgemäß wird dabei ein Synchronisieren der lokalen Taktsignale der Teilmesseinheiten, insbesondere ein Phasen-Synchronisieren, durch ein Synchronisationssignal durchgeführt, zur Sicherstellung einer Gleichzeitigkeit des Erfassens des Messwerts in den Teilmesseinheiten mit einer zeitlichen Unsicherheit, welche einen Phasen-Jittern des Synchronisierens nicht übersteigt. Die zeitliche Unsicherheit ist somit jedenfalls geringer als 90 % einer Periodendauer des lokalen Taktsignals, insbesondere geringer als eine halbe Periodendauer, vorzugsweise geringer als ein fünftel der Periodendauer oder gar noch geringer.

Dabei wird mit der Teilmesseinheit eine physikalische Größen wie Position, Geschwindigkeit, Beschleunigung, Berührung, Temperatur, Luftdruck, Luftfeuchte, Kraft, Druck, Spannung oder Strom, bzw. eine beliebige Kombination dieser, erfassbar.

Die Übertragung des Synchronisationssignals kann dabei im einfachsten Fall über eine eigens dafür vorgesehene Signalleitung erfolgen.

Um zur Synchronisation der lokalen Taktsignale keine zusätzliche Signalleitung bereitstellen zu müssen, kann das Synchronisationssignal auch vorteilhaft über eine bereits vorhandene Leitung mitübertragen werden. Insbesondere bietet sich hierzu beispielsweise die Spannungsversorgung, die Triggersignalleitung oder eine andere bereits vorhandene Signal- bzw. Takt- oder Datenleitung, insbesondere Leitungen eines digitalen Kommunikationskanals zwischen den Teileinheiten oder zwischen den Teileinheiten und einer übergeordneten Steuereinheit, an.

Unter Leitung bzw. Signalleitung ist hierbei nicht zwingen ein einzelner physikalischer Draht zu verstehen, sondern es kann sich dabei beispielsweise durchaus auch um ein differenzielles Leitungspaar, einen Lichtwellenleiter, ein Funkkanal, elektromagnetische Wellenübertragung oder dergleichen handeln.

Um die gleichzeitige Übertragung des Synchronisationssignals gemeinsam mit anderen Signalen zu verwirklichen, sind verschiedenste, beispielsweise aus der Nachrichtentechnik bekannte Verfahren anwendbar. Hierbei sind insbesondere Modulationsverfahren in verschiedenster Ausprägung, sowie Leitungscodier-Verfahren zur Datenübertragung von Bedeutung.

Möglich ist beispielsweise die Verwendung eines Modulationsverfahrens wie der ASK-, PSK-, FSK-, QAM-Modulation, oder anderer dafür geeigneter Modulations-verfahren, welche dem Fachmann auf diesem Gebiet geläufig sind bzw. in der entsprechenden Fachliteratur hinreichend dokumentiert sind und dort nachgeschlagen werden können.

Auch Leitungscodierverfahren wie insbesondere ein Manchester-Code oder andere, können zur kombinierten Übertragung einer Daten- und Synchronisations-Information über ein und dieselbe Leitung herangezogen werden.

Weiters ist beispielsweise auch die Verwendung von Flanken eines Start-, Stopp-, Daten- oder Adress-Bits einer Kommunikationsleitung nutzbar, sofern diese auf einem als Taktreferenz geeigneten Signal basieren, bzw. mit einem solchen synchronisiert sind. Bei einer modulierten Signalübertragung bzw. einer Funkübertragung kann beispielsweise auch die Funk-Trägerfrequenz oder ein mitübertragenes Pilotsignal zur Synchronisation Verwendung finden.

Daneben sind aus dem Bereich der Nachrichtentechnik noch zahlreiche spezielle Taktrückgewinnungsverfahren bekannt, welche sich zur erfindungsgemäßen Übertragung des Synchronisationssignals ebenfalls eignen. Anders als in der Nachrichtentechnik wird dabei die extrahierte Taktinformation jedoch nicht primär dazu verwendet, um damit das ebenfalls übertragene Datensignal synchron zu demodulieren, sondern es wird damit der jeweilige Takt der lokalen Auswerteeinheiten synchronisiert, wodurch folglich das Triggersignal in jedem Teilsystem synchron ausgewertet wird wodurch erfindungsgemäß eine hohe Gleichzeitigkeit der Messwerterfassung erzielt werden kann. Eine synchrone Demodulation ist dabei optional auch weiterhin möglich.

Die gemeinsame Übertragung von Synchronisationssignal und Triggersignal kann weiters auch in Form einer logischen Verknüpfung der Signale realisiert werden. Eine solche stellt eine spezielle, einfache Realisierung eines digitalen Modulations- oder Codierverfahrens dar.

Zur Erzeugung des lokalen synchronisierten Taktsignals können beispielsweise ein PLL (Phase Locked Loop), ein modifizierter Costas-Loop, oder andere bekannte und hierfür geeignete Schaltungen herangezogen werden.

Es bietet sich auch die Möglichkeit der Übertragung eines Synchronisationssignals mit einem vielfachen der Zykluszeit des Taktsignals an. Aus diesem kann, beispielsweise mit Hilfe eines PLL, wiederum ein Taktsignal ursprünglicher Frequenz in synchroner Weise generiert werden, wenn die PLL einen entsprechend stabilen statischen Phasen-Offset, Tracking Jitter und ein geringes Phasen-Rauschen aufweist. Dies bietet, im Gegensatz zu der ebenfalls möglichen direkten Übertragung des Synchronisationssignals als ein globales Taktsignal, beispielsweise den Vorteil einer wesentlich niedrigeren Übertragungsfrequenz, was bezüglich der Störsicherheit, der Störaussendung sowie der dadurch reduzierten Qualitätsanforderungen an die verwendenden Kabel oder Leitungen Vorteile mit sich bringt.

In einer möglichen, alternativen Ausführungsform der Erfindung könnte auf einen lokalen Taktgeber in den Teilsystemen sogar verzichtet werden. Das lokale Taktsignal wird in diesem Fall direkt mithilfe eines der zuvor beschriebenen Verfahren, direkt übertragen oder mittels eines PLL aus dem Synchronisationssignal erzeugt, wodurch sich Kosten und Baugröße des Teilsystems reduzieren lassen. Wird das lokale Taktsignal mit einem frei wählbaren Phasenversatz gegenüber dem Synchronisationssignal beaufschlagt, kann zusätzlich eine Kompensation der unvermeidlichen Signallaufzeit aufgrund der Leitungslängen und aufgrund von schaltungstechnischen Verzögerungen in den Bauelementen erreicht werden, was eine weitere Verbesserung der Synchronisationsgenauigkeit des Messsystems ermöglicht. Vorteilhaft wird die Signallaufzeit und Verzögerung dabei vom Messsystem automatisch ermittelt und anschliessend der daraus resultierende Phasenversatz in den Teilsystemen eingestellt. Die Ermittlung von Laufzeiten bzw. der Notwendigen Korrekturwerte kann auch manuell geschehen, beispielsweise im Rahmen eines Einricht- oder Kalibriervorgangs. Auch eine theoretische Ermittlung von Verzögerungen anhand von Leitungslängen, Bauteilverzögerungen aus Datenblättern, etc. ist möglich. Es können auch bekannte oder gemessene Flankensteilheiten der übertragenen Signale, gemeinsam mit den Schaltschwellen der Logikelemente Berücksichtigung finden.

Die erfindungsgemässe Vorrichtung und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
Fig. 1a den im Stand der Technik vorhandenen zeitlichen Versatz des Zeitpunktes der Messwerterfassung bei taktbasierter Messwerterfassung;
Fig. 1b ein Beispiel des im Stand der Technik vorhandenen zeitlichen Versatzes des Zeitpunktes der Messwerterfassung in zwei getriggerten Teilmesssystemen bei unsynchronisierten lokalen Taktsignalen;
Fig. 2 beispielhaft anhand von Zeitdiagrammen einer erfindungsgemäßen Synchronisation der lokalen Taktsignale in mehreren Teilmesssystemen anhand einer Ausführungsform mit einem kombinierten Takt-Trigger-Signal und einer synchronen Rückgewinnung des Takt- und Triggersignals in den Teilsystemen;
Fig. 3 einige Beispiele von erfindungsgemäßen Ausführungsformen einer Takt-Trigger-Kombination mittels einer beispielhaften Auswahl von unterschiedlichen Modulations-verfahren;
Fig. 4 beispielhaft ein geodätisches Instrument mit zwei erfindungsgemäßen Teilsystemen zur Winkelbestimmung;
Fig. 5 beispielhaft einen articulated Arm mit erfindungsgemäßen Positions- und Winkelmesssystemen;
Fig. 6 beispielhaft ein Koordinatenmessgerät in Portalbauweise mit erfindungsgemäßen Teilsystemen zur Positionsmessung;
Fig. 7 beispielhaft eine schematische Darstellung eines aus dem Stand der Technik bekannten Meßsystems mit Trigger-signal;
Fig. 8 beispielhaft eine schematische Darstellung einer Ausführungsform eines Meßsystems mit erfindungsgemäß synchronisierten Taktsignalen, wobei das Triggersignal den Teilsystemen asynchron bereitgestellt und in den jeweiligen Teilsystemen zeitquantisiert wird;
Fig. 9 beispielhaft eine schematische Darstellung einer Ausführungsform eines Meßsystems mit erfindungsgemäß synchronisierten Taktsignalen, wobei das Triggersignal in einem der Teilsysteme zeitquantisiert und anschließend den weiteren Teilsystemen bereits synchronisiert bereitgestellt wird;
Fig. 10a beispielhaft eine schematische Darstellung einer Ausführungsform eines Meßsystems mit erfindungsgemäß synchronisiertem Takt- und Triggersignal nach Fig. 9 mit einer Sub-Sampling-Interpolation;
Fig. 10b beispielhaft einen Zeitverlauf der zu Fig. 10a zugehörigen Signale;
Fig. 10c beispielhaft eine schematische Darstellung einer Ausführungsform eines Meßsystems mit erfindungsgemäß synchronisiertem Taktsignal und asynchronem Triggersignal entsprechend Fig. 8 mit einer Sub-Sampling-Interpolation;
Fig. 10d beispielhaft einen Zeitverlauf der zu Fig. 10c zugehörigen Signale.

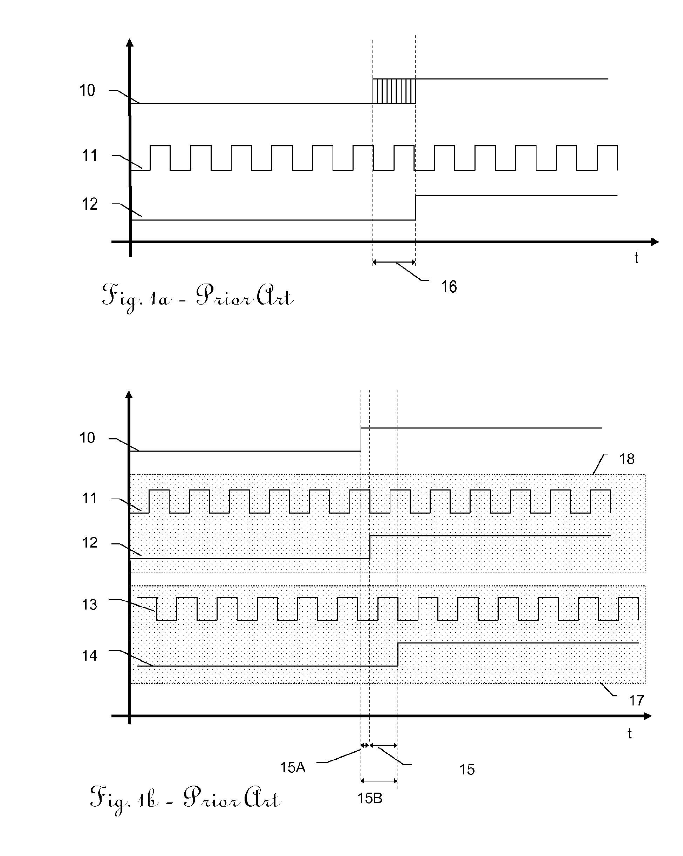

Fig. 1a zeigt die zeitliche Unsicherheit, welche bei digitaler Signalverarbeitung eines externen Signals 10 aufgrund der Zeitquantisierung durch die dabei nötige Synchronisierung des externen Signals 10 auf ein lokales Taktsignal 11. Da das externe Signal asynchron zum lokalen Verarbeitungstakt 11 in der Teilmesseinheit auftreten kann, muss, um eine deterministische digitale Verarbeitung zu garantieren, zum lokalen Takt 11 synchronisiert werden. Das resultierende, einsynchronisierte interne Signal 12, welches schaltungsintern weiterverarbeitet wird, kann dabei einen zeitlichen Versatz 16 gegenüber dem externen Signal 10 von bis zu einer Periodendauer des lokalen Taktsignals 11 erfahren. Bei den hier behandelten hochgenauen Messsystemen kann ein derartiger Versatz 16, speziell in Bezug auf ein, den Zeitpunkt der Messwerterfassung bestimmendes, Triggersignal 10 zu unerwünschten und durch die unbestimmte Phasenlage des Taktsignals 11 auch nichtdeterministischen Effekten und Messabweichungen führen, insbesondere wenn die Bandbreite des zu erfassenden Messsignals die lokale Taktfrequenz 11 deutlich übersteigt.

Ein Teilaspekt der erfindungsgemäßen Synchronisation ist auch, dass in den Teilsystemen mit langsameren lokalen Taktsignalen gearbeitet werden kann, wodurch diese einen reduzierten Energieverbrauch aufweisen, aber dennoch synchronisationsbedingt eine gleich bleibende oder gar verbesserte Gleichzeitigkeit der Messungen erzielt werden kann.

Speziell wenn das Auslöse- oder Triggersignal 10 dazu Verwendung finden sollte den Zeitpunkt der Messwerterfassung in mehreren Teilmesssystem 17,18 exakt festzulegen, kann dies Aufgrund der in Phasenlage und/oder Frequenz abweichenden lokalen Taktfrequenzen 11,13 in den jeweiligen Teilmesseinheiten 17,18, zu störenden Abweichungen 15 des tatsächlichen Zeitpunkts der Messwerterfassung zwischen den Teilmesssystemen 17,18 (sowie auch zu unterschiedlichen Abweichungen 15A,15B gegenüber dem eigentlichen Triggerzeitpunkt 10) führen. Da diese Abweichungen aufgrund der freilaufenden lokalen Taktsignale 11,13 nichtdeterministisch sind, entziehen sich diese auch einer numerischen Korrektur und können allenfalls nur statistisch berücksichtigt werden. (In den Figuren sind jeweils gleiche Signale nur einmal dargestellt, jedoch mit mehreren Bezugszeichen versehen.) Das hier erfindungsgemäße Prinzip lässt sich auf eine beliebige Anzahl von Teilsystemen 17,18 erweitern.

In Fig. 1b ist ein solcher, im Stand der Technik vorhandener, zeitlicher Versatz 15 dargestellt, welcher die lokalen Triggersignale 12 und 14 gegeneinander und auch gegenüber dem auslösenden Triggersignal 10 aufweisen können. Dieser Jitter 15,15A,15B des lokalen Messzeitpunktes bedingt sich durch die freilaufenden lokalen Taktsignale 11 und 13 mit welchen das Triggersignal 10 in den beiden hier dargestellten Teilsystemen abgetastet wird. Das jeweilige lokale Triggersignal 12 bzw. 14 ist somit zwar synchron zum jeweiligen lokalen Taktsignal 11 bzw. 13, da jedoch die lokalen Taktsignale 11 und 13 der Teilsysteme keine konstante (oder zumindest keine bekannte) Frequenz-oder Phasenrelation zueinander aufweisen, können die lokalen Triggersignale 12 und 14 schlimmstenfalls einen Versatz 15 von bis zu annähernd einem Taktzyklus des lokalen Taktsignals 11 bzw. 13 aufweisen. Die Messwerte werden somit - trotz des gemeinsamen Triggersignals 10 - von den Teilmesssystemen mit einer zeitlichen Unsicherheit von bis zu einem Taktzyklus aufgezeichnet. Dies kann, je nach Taktfrequenz und gewünschter Messgenauigkeit, insbesondere in hochpräzisen Messsystemen, zu merklichen Fehlern führen und sollte daher vermieden werden. Zusätzlich zur Unsicherheit, dass alle Sensoren zum exakt gleichen Zeitpunkt messen (15) bestehen die Latenzen 15A und 15B gegenüber dem eigentlichen Auslösesignal 10. Die Latenzzeiten 15A und 15B tragen ebenfalls zum Versatz zwischen gewünschtem und tatsächlichem Messzeitpunkt bei und sind nicht deterministisch.

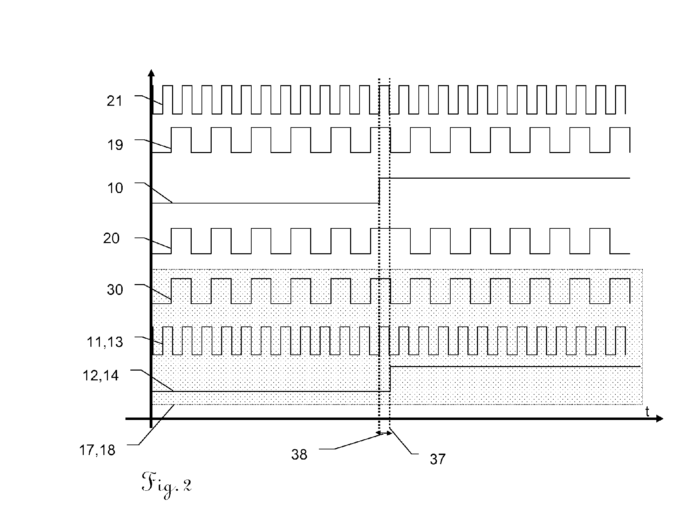

Um die erfindungsgemäße Reduktion dieses Fehlers zu erläutern, stellt Fig. 2 den in Fig. 1 dargestellten Sachverhalt mit Teilsystemen 17,18 mit den lokalen Taktsignalen 11,13 dar, welche erfindungsgemäß mittels eines Synchronisationssignals 19 bzw. 30 zwischen den Teilmesssystemen synchronisiert sind. Im Vergleich zu Fig. 1 ist hierdurch der zeitliche Versatz 37 (welcher dem Versatz 15 in Fig. 1 entspricht) des Zeitpunktes der Erfassung in den jeweiligen Teilsystemen deutlich geringer bzw. soweit reduziert, dass dieser als praktisch nicht mehr vorhanden anzusehen ist. Er liegt nunmehr im Bereich der Phasenungenauigkeit (Jitter) der Synchronisation der Taktsignale 11 und 13, welche deutlich geringer ist als eine Taktperiode. Die Latenz 38 zwischen gewünschtem und tatsächlichem Messzeitpunkt ist aufgrund der Asynchronität des externen auslösenden Signals immer noch vorhanden, kann jedoch beispielsweise mit Hilfe eines höheren Taktes in einem Teilsystem (bspw. einem übergeordneten Steuergerät) oder mit einer analogen Schaltung gemessen und zusammen mit weiteren Latenzen durch mathematische Interpolation oder Extrapolation kompensiert werden, da dieses nunmehr bestimmbar ist.

Alternativ zu einer Übertragung des auftretenden, externen Triggersignals 10, kann auch das asynchrone Triggersignal 10 in einer Teileinheit, als Triggereinheit, ebenfalls auf den synchronisierten Takt 21 oder das Synchronisationssignal 19 synchronisiert und anschließend das bereits synchronisierte Triggersignal den Teilmesseinheiten 17,18 übermittelt werden. Die Bestimmung der Latenzzeit 38 kann in diesem Fall nur einmalig in der Triggereinheit erfolgen, welche diese Latenzinformation den Teilmesssystemen 17,18 oder der, die Messwerte weiterverarbeitenden Steuereinheit zum zwecke einer allfälligen Kompensation bereitstellt.

In einem einfachsten Fall wird dabei das Synchronisationssignal 30 direkt über eine dezidierte Leitung bereitgestellt und es entspricht somit dem Synchronisationssignal 19. In einer einfachen Ausführungsform wären dabei die Synchronisationssignale 39 und 19 und die Taktsignale 21, 11 und 13 sogar dasselbe Signal.

In Fig. 2 ist eine Ausführungsform mit einer Übertragung eines Synchronisationssignals welches eine geringere Frequenz als jene des Taktsignals aufweist dargestellt. Beispielsweise bei Verwendung eines PLL muss nicht direkt das hochfrequente Taktsignal 30 bzw. 35 des Messsystems übertragen werden, sondern es kann auch ein davon abgeleitetes, niederfrequentes Synchronisationssignal 31 mit einem vielfachen der Zykluszeit des Taktsignals 30 zur Synchronisierung des PLL verwendet werden. In Fig. 2 ist beispielhaft eine doppelte Zykluszeit gezeigt. Im dargestellten Fall sind (insbesondere aus Anschaulichkeitsgründen) die lokalen Taktfrequenzen in den jeweiligen Teilmesssystemen gleich, was jedoch nicht zwingend der Fall sein muss.

Wird ein PLL oder eine gleichwertige Schaltung zur Synchronisation des Taktsignals 11,13 durch das Synchronisationssignal 30 im Teilsystem verwendet, so liegt der zeitliche Versatz gegenüber dem ursprünglichen Taktsignal 21 lediglich im Bereich des Phasen-Jitters des PLL bzw. des Synchronisationssignals. Jener bewegt sich bei am Markt üblichen PLL-Bausteinen typischerweise im Bereich von Pico-Sekunden. Um dieselbe Gleichzeitigkeit der Messwerterfassung mit einer Ausführung nach dem Stand der Technik zu erreichen, wäre zum Vergleich ein Abtasten des Trigger-signals mit einer Frequenz von mehreren GHz bis THz nötig.

Es besteht bei einem PLL optional auch die Möglichkeit, die immer vorhandenen Signallaufzeiten und Signalverzögerungen bedingt durch die Kabelverbindungen und Bauteile mittels eines einstellbaren Phasen-Offsets des PLL zu kompensieren, womit die Möglichkeit besteht die zeitliche Synchronität der Teilsysteme 17,18 zueinander noch weiter zu erhöhen.

Alternativ zu einem PLL bieten sich noch weitere Schaltungen zur Synchronisation von Taktsignalen an, wie beispielsweise ein modifizierter Costas-Loop, oder eine andere bekannte und hierfür geeignete Struktur.

Im speziellen zeigt Fig. 2 mit dem kombinierten Takt-Trigger-Signal 20 ein Beispiel einer Ausführungsform, bei welcher sowohl das Synchronisationssignal wie auch das Triggersignal als ein kombiniertes Takt-Trigger-Signal 20 über dieselbe Leitung übertragen wird. Dabei wird aus dem Taktsignal 21 ein Synchronisationssignal 19 niedrigerer Frequenz abgeleitet. Dieses Synchronisationssignal 19 wird mit dem Triggersignal 10, beispielsweise wie hier gezeigt durch eine digitale Phasenmodulation des Synchronisationssignals 19 mit dem Triggersignal 10 (z.B. anhand eines XOR-Logikgatters) verknüpft und den Teilmesssystemen 17,18 als kombiniertes Takt-Trigger-Signal 20 bereitgestellt. In einer anderen Betrachtungsweise wird das Triggersignal 10 mit Hilfe einer Ausführungsform einer Manchester-Codierung mit dem Synchronisationssignal 19 als kombiniertes Signal 20 übertragen.

In den Teilsystemen 17,18 wird das kombinierte Takt-Trigger-Signal 20 nunmehr wieder in ein Synchronisationssignal 30, welches zur Synchronisation des lokalen Taktsignals 11 bzw. 13 verwendet wird, und ein Triggersignal 12 bzw. 14 aufgeteilt. Da dies in jedem der Teilsysteme 17,18 gleichartig erfolgt, sind somit die Taktsignale 11,13 und Triggersignale 12,14 der Teilmesssysteme untereinander in einem hohen Grade simultan zueinander. Somit ist auch der Zeitpunkt der Messung 37 in allen Teilsystemen 17,18 mit einer hohen zeitlichen Genauigkeit der Selbe. Die Signale 20,30,11,13,12,14 sind nur einmal dargestellt da sie in den Teilsystemen bis auf einen allfälligen, sehr geringen Phasenjitter 37 gleich sind.

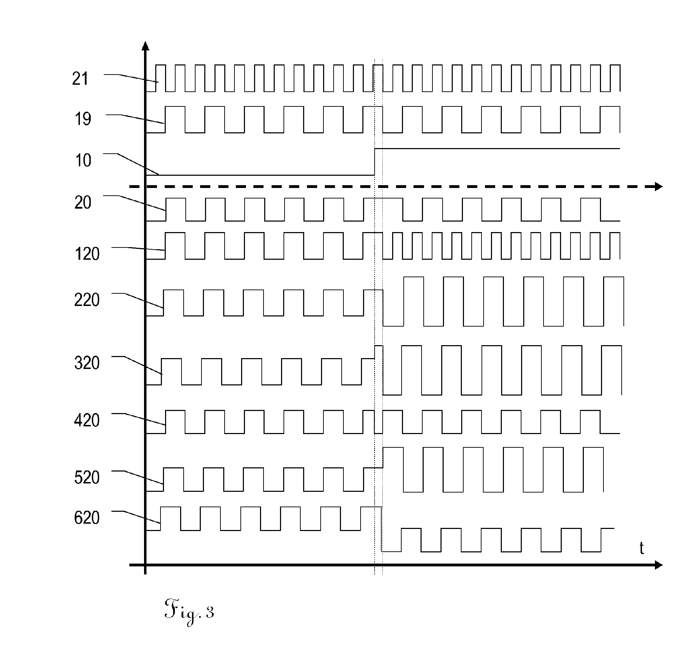

Fig. 3 zeigt beispielhaft einige Ausführungsformen bei welchen das Synchronisationssignal 19 und das Trigger-signal 10 mittels eines Modulationsverfahrens über ein und dieselbe Leitung übertragen werden. Dadurch wird die erfindungsgemäße Übertragung des, gegenüber dem Stand der Technik zusätzlichen, Synchronisationssignals 19 möglich, ohne dafür eine zusätzliche Signalleitung zu benötigen.

Es können hierbei verschiedenste Modulationsverfahren, welche beispielsweise aus der Nachrichtentechnik bekannt sind, eingesetzt werden. Beispielsweise sind hierfür Amplituden- (ASK-), Phasen- (PSK-), Frequenz- (FSK-), Quadratur- (QAM-) oder andere Modulationsverfahren einsetzbar. Bedingt durch die speziellen Eigenschaften der in dieser Anwendung zu übertragenden Signale, können manche dieser Verfahren recht einfach, beispielsweise in Form von Logikgattern implementiert werden. Es sind aber auch wesentlich komplexere Modulator-Strukturen einsetzbar, wofür es am Markt etliche integrierte Bausteine gibt, welche die Kernkomponenten zur Modulation bzw. Demodulation bereits enthalten.

Im speziellen zeigt Fig. 3 das Taktsignal 21, das Synchronisationssignal 19 und das Triggersignal 10, welche entsprechend der Folgenden, anhand einiger beispielhaft erläuterten Methoden kombiniert werden können.

Das Signal 20 zeigt eine digitale PSK-Modulation welche beispielsweise bei digitalen Signalen in einfacher Form durch eine logische XOR-Verknüpfung realisiert werden kann. Dabei wird abhängig vom Zustand des Triggersignals 10 die Phasenlage des Synchronisationssignals 19 um 180° gedreht und das entstehende Takt-Trigger-Signal 20 wird den Teilsystemen bereitgestellt.

Das Signal 120 stellt eine Ausführungsform mit einer digitalen FSK-Modulation dar, bei welcher die Frequenz des übertragenen Signals 120 abhängig vom Zustand des Trigger-signals 10 verändert wird. Im gezeigten Beispiel wird abhängig vom Zustand des Triggersignals 10 zwischen einer Frequenz und deren Hälfte gewechselt.

Das Signal 220 zeigt eine Ausführungsform mit einer digitalen ASK-Modulation, bei welcher die Amplitude des Synchronisationssignals 19 abhängig vom Triggersignal 10 moduliert wird, im dargestellten Fall symmetrisch um den Signalmittelwert.

Das Signal 320 zeigt eine Ausführungsform mit einer Übertragung des asynchronen Triggersignals 10 mittels einer ASK-Moduklation. Eine Realisierung dieses Verfahrens wäre neben einer Vielzahl von anderen Möglichkeiten beispielsweise auf einfache Art durch das Aufschalten eines Pulldown-Widerstandes auf die Synchronisationsleitung durch den Triggerauslöser möglich.

Das Signal 420 zeigt eine Ausführungsform mit einer PSK Modulation, wobei das Triggersignal 10 nicht in einer Triggereinheit synchronisiert und übertragen wird, sondern in asynchroner Form den Teileinheiten 17,18 Übermittelt wird und die Synchronisation jeweils in den Teileinheiten 17,18 erfolgt.

Das Signal 520 zeigt eine Ausführungsform mit einer Kombinierten PSK- und ASK- Modulation, bei welcher Sowohl Phase als auch Amplitude des Synchronisationssignals 19 mit dem Auslösesignal 10 verändert wird.

Das Signal 620 zeigt eine Ausführungsform mit einem Kombinierten Signal 620, welches durch Aufschalten eines triggersignalabhängigen DC-Offsets auf das Synchronisationssignal 19 erfolgt.

Die Aufstellung von Fig. 3 ist keine abschließende Aufzählung, sondern soll lediglich einige exemplarische Beispiele von anwendbaren Möglichkeiten zur Realisierung einer gemeinsamen Übertragung eines erfindungsgemäßen Synchronisationssignals gemeinsam mit einem weiteren Signal und einige Beispiele möglicher Signalformen geben. Dem Fachmann sind allfällige spezifische Anpassungen und konkrete Ausführungen hiervon geläufig bzw. können diese in entsprechenden Fachbüchern, Datenblättern und Application-Notes nachgeschlagen werden. Selbstverständlich sind neben den erwähnten digitalen Modulations- und Codierverfahren auch analoge Verfahren in äquivalenter weise anwendbar.

Ein deratiges, geeignetes Codierverfahren, welches entwickelt wurden um Datensignale an spezielle Anforderungen von Übertragungskanälen anzupassen, kann beispielsweise zwingend einen Pegelwechsel nach einer gewissen Anzahl von Taktzyklen bzw. übertragenen Bits fordern. Ein solcher Wechsel kann bei der hier beschriebenen Anwendung auch dazu genutzt werden, um aus einem in dieser Weise codierten Daten- oder Trigger-signal 10 ein Synchronisationssignal 19 zu extrahieren auf welches ein lokales Taktsignal 11,13 synchronisiert werden kann. Außerdem können beispielsweise auch Flanken von Start-, Stop- und/oder eines beliebigen Kommunikations-Bits einer digitalen Kommunikation zur Synchronisation der Taktsignale 11,13 Anwendung finden.

Es ist auch möglich ein Synchronisationssignal 19 auf eine Versorgungsleitung (Spannungs- oder Stromversorgung) aufzumodulieren, bzw. eine Frequenz eines Wechselspannungs-Versorgungssignals oder eines Wechselanteils der Versorgungsspannung zur Synchronisation heranzuziehen, insbesondere eine Phasenlage eines solchen Wechselsignals. Für weitere Details einer derartigen Ausführungsform einer Übertragung des Synchronisationssignals mit einem weiteren Signal als Takt-Versorgungs-Signal über eine gemeinsame Leitung, sei auf entsprechende Fachbücher verwiesen.

Weitere Details und Schaltungsbeispiele zu den erwähnten Übertragungs- bzw. Modulations-Verfahren sind, falls sie nicht ohnedies geläufig sind, in der einschlägigen elektrotechnische Fachliteratur wie beispielsweise in "Digital Communications" von John G. Proakis - Mcgraw-Hill Publ.Comp. zu finden, weshalb auf eine weitere, detaillierte Beschreibung dieser verzichtet wird.

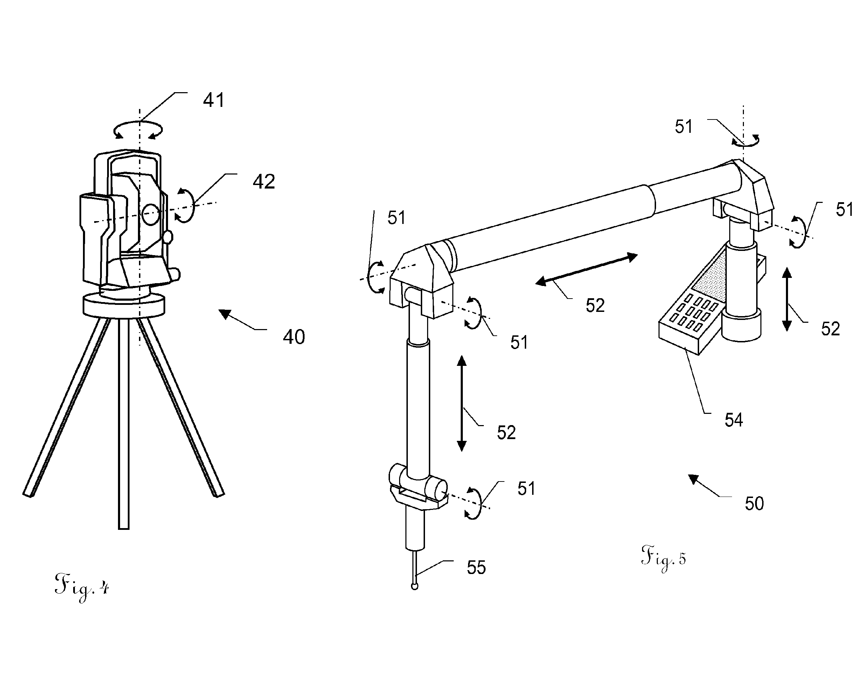

Fig. 4 zeigt ein Anwendungsbeispiel des Synchronisationsverfahrens in einem geodätischen Instrument 40. Es sind hierbei zwei hochgenaue Winkelgeber 41 und 42 verbaut, welche in der Figur durch deren Drehachsen und Drehsinn symbolisiert sind. Die erfindungsgemäße Synchronisierung der Winkelgeber als Teilmesseinheiten erlaubt eine in höchstem Masse simultane Messung der Winkel auf beiden Achsen. Zusätzlich kann auch eine optional vorhandene, optische Entfernungsmessung ebenfalls nach demselben Prinzip synchronisiert sein, womit ein Raumpunkt exakt zu einem bestimmten Zeitpunkt in drei Koordinaten vermessen werden kann. Das Triggersignal kann hier beispielsweise von der Messelektronik des Gerätes 40 zyklisch oder anhand eines vorgegebenen Messprogramms generiert werden, sowie auch manuell durch den Bediener auslösbar sein, beispielsweise auch über ein Funksignal.

Fig. 5 zeigt ein Anwendungsbeispiel eines Messsystems in Form eines articulated Arms 50 mit erfindungsgemäß synchronisierten Teilmesseinheiten zur Positions- 52 und/oder Winkel- 51 Messung. Dabei löst ein am ende des Armes angebrachter Tastkopf 55 bei Kontakt mit einem Körper das Triggersignal aus. Auf dieses Triggersignal hin, speichern alle erfindungsgemäß synchronisierten Teilsysteme ihren aktuellen Lage-Messwert. Diese Lagen werden dann, beispielsweise über ein serielles Bussystem von einer Steuereinheit 54 ausgelesen. Anhand dieser Einzellagen und den Geometrieinformationen des Armes ist jene Raumposition bestimmbar, welche dem Kontaktpunkt des Tastkopfes mit dem Werkstück entspricht. Somit können Körper mit beliebigen Geometrien Punktweise mit hoher Genauigkeit vermessen werden.

Selbst wenn durch ständige Bewegungen der Achsen in Form von unruhiger Führung, Zittern und Vibrationen, wie dies beispielsweise bei einer Handführung des Messarmes durch einen Bediener zu erwarten ist, die Positionswerte nicht zeitlich stabil sind, kann dennoch aufgrund der hochpräzisen Gleichzeitigkeit der einzelnen Messungen eine genaue Raumlage ermittelt werden. Dabei ist der Zeitpunkt der Messwerterfassung in allen Teilmesseinheiten derart exakt gleichzeitig, dass selbst die durch eine allfällige Bewegung während des Auslösens hervorgerufen zeitliche Positionsänderung zu keiner Positionsabweichung in den, durch die Teilmesssysteme aufgenommenen, Messwerten führt, da alle Werte zu exakt demselben Zeitpunkt aufgenommen wurden und somit in sich konsistent sind. Ein zeitlicher Versatz in der Messwerterfassung der einzelnen Achsen würde bei einem sich bewegenden Messsystem ohne hochgenaue Synchronisation zu einem inkonsistenten Satz von Positionswerten führen, welche nicht der tatsächlichen Position zu einem Triggerzeitpunkt, sondern vielmehr den Positionen der Achsen zu - wenn auch nur geringfügig - unterschiedlichen Zeitpunkten entsprechen würde, was zusammengefasst als eine Raumkoordinate in einer 3D Position resultieren würde, welche der Messarm tatsächlich gar nie eingenommen hatte.

Die erfindungsgemäße Synchronisation der Teilsysteme verringert dabei Messfehler aufgrund der Bewegungen des Messsystems während des Messvorgangs.

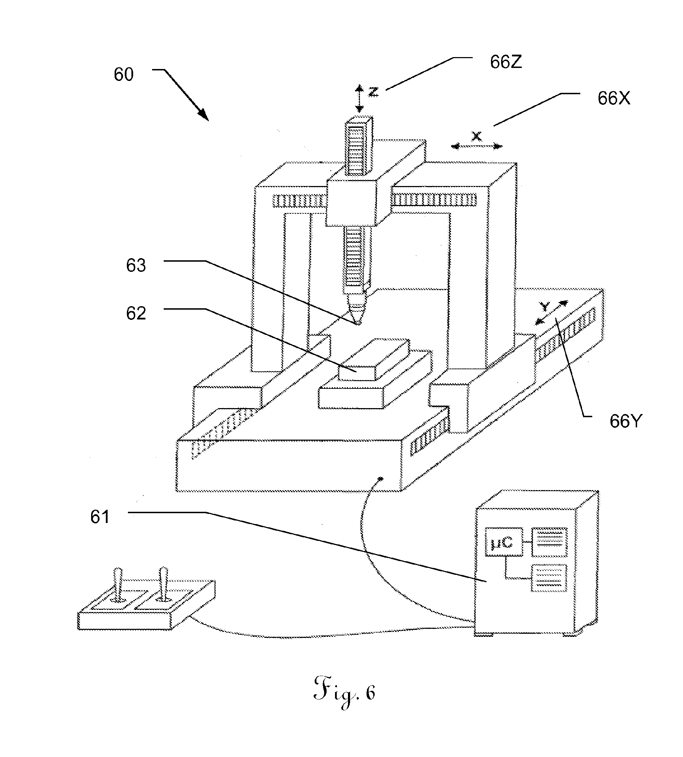

Fig. 6 zeigt ein Anwendungsbeispiel in Form einer Koordinatenmessmaschine 60 in Portalbauweise zur Vermessung eines Werkstücks 62 mit erfindungsgemäß synchronisierten Positionsgebern 66X, 66Y und 66Z. Das Prinzip der Auslösung des Triggersignals durch einen taktilen Tastkopf 63, einer Lichtschranke oder des Überschreitens eines vorbestimmten Pegels eines analogen Signals, entspricht dem zuvor bei Fig. 5 beschriebenen. Anhand des Triggersignals, ausgelöst durch den Tastkopf 63, Erfassen die Positionsgeber 66X, 66Y und 66Z die jeweilige Achsposition als Messwert, welche dann von der Steuereinheit 61 ausgelesen und zu Raumkoordinaten weiterverarbeitet wird. Auch bei analogen "Scanning-Probes", deren Tasterauslenkung nicht nur digital sondern als analoger Auslenkungswert ausgelesen wird, kann deren Auslenkungswert erfindungsgemäß synchron miterfasst werden. Die Achsen X, Y und Z sind hierbei jedoch motorisch angetrieben und das Triggersignal wird während der Bewegung der Achsen ausgelöst. Wird dieses Auslösen nicht von allen Achsen exakt zur gleichen Zeit oder zumindest mit möglichst geringer Zeitunsicherheit erkannt, so wird aufgrund der Bewegung der Achsen nicht exakt die Position zum Triggerzeitpunkt, sondern in jeder Achse eine etwas davon abweichende Position erfasst bzw. kann die Position zum Triggerzeitpunkt nur mit entsprechender Unsicherheit berechnet werden. Dies führt zu Fehlern in den Raumpositionen, welche vorwiegend nicht deterministisch sind und deshalb auch nicht numerisch kompensiert werden können. Neben den Achspositionen kann dabei auch die Auslenkung eines messenden Tastkopfs einer Messmaschine nach dem erfindungsgemäßen Prinzip zeitsynchron erfasst werden.

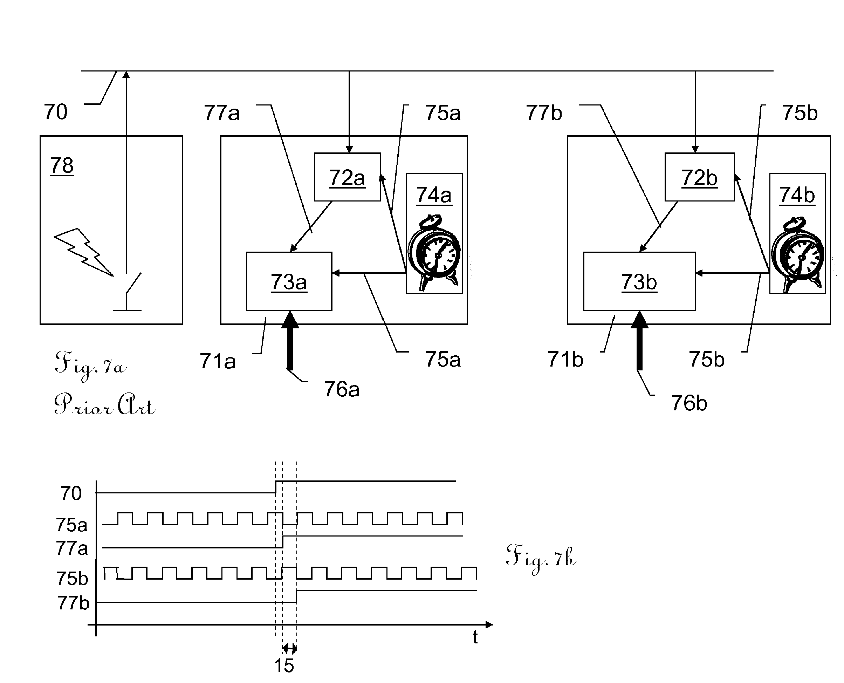

Die Darstellung von Fig. 7a zeigt ein beispielhaftes Blockschaltbild eines aus dem Stand der Technik bekannten Meßsystems, anhand dessen einige der in solchen Systemen auftretenden Probleme nochmals im Detail erläutert werden. Die Teilsysteme 71a und 71b sind dabei Teilmesseinheiten zur Erfassung eines Messwerts 76a bzw. 76b, welcher als analoge oder digitale Information bereitsteht, bzw. durch das Teilsystem selbst durch Erfassung einer oder mehrerer physikalischen Größen bereitgestellt wird. Das erfassen dieses Messwertes wird ausgelöst durch ein Triggersignal 70 eines Teilsystems 78, welches auch als Triggersystem bezeichnet werden kann. Im einfachsten Fall wird der Triggerzeitpunk durch eine Flanke eines elektrischen Signals bestimmt, wie dies beispielsweise bei einem schaltenden Messtaster der Fall ist. Das Triggersignal 70 kann unabhängig von jeglicher Taktung, zu einem beliebigen Zeitpunkt auftreten.

In den Teilsystemen 71a und 71b wird das Triggersignal im Block 72a/b mit einem jeweiligen Taktsignal 74a/b abgetastet zu einem, zu dem jeweiligen Taktsignal 74a/b synchronisierten Triggersignal 77a/b, mit welchem dann in der - ebenfalls mit dem Taktsignal, oder einem davon abgeleiteten Taktsignal 75a/b arbeitenden - Latcheinheit 73a/b der Messwert zu diesem Zeitpunkt erfasst und eventuell zwischengespeichert (=gelatched) wird.

Da in Systemen nach dem Stand der Technik die Taktsignale der Takteinheiten 74a/b unabhängig voneinander sind und in Frequenz und Phase beliebig voneinander abweichen können, ist auch der Zeitpunkt der jeweiligen lokalen Triggerung einer Zeitverschiebung unterworfen, welche nicht deterministisch ist und in ungünstigen Fällen eine Größe von bis zu einem Taktzyklus erreichen kann.

Dabei auftretende Signale sind beispielhaft in Figur 7b dargestellt. Das Triggersignal 70 kann dabei zu einem beliebigen Zeitpunkt auftreten. Die Taktsignale 75a und 75b sind in den jeweiligen Teilsystemen ohne jegliche Beziehung zueinander von jeweils lokalen Taktgebern 74a/b erzeugt. Jeweils auf die fallende Flanke des Taktsignals 75a bzw. 75b wird das Triggersignal 70 ausgewertet, womit der Zeitpunkt der lokalen Triggerung 77a und 77b festgelegt wird, bei welchem der Messwert 76a bzw. 76b von der Latcheinheit 73a bzw. 73b erfasst wird. Dadurch entsteht ein zeitlicher Versatz 15, welcher hier auch mit gestrichelten Linien dargestellt ist. Der somit vorhandene zeitliche Jitter 15, welcher trotz des gemeinsamen Trigger-signals vorhanden ist, kann eine Bandbreite von bis zu einer Zyklusdauer des Taktsignals haben und ist aufgrund der Frequenzdrift der Taktsignale gegeneinander auch nicht konstant über die Zeit.

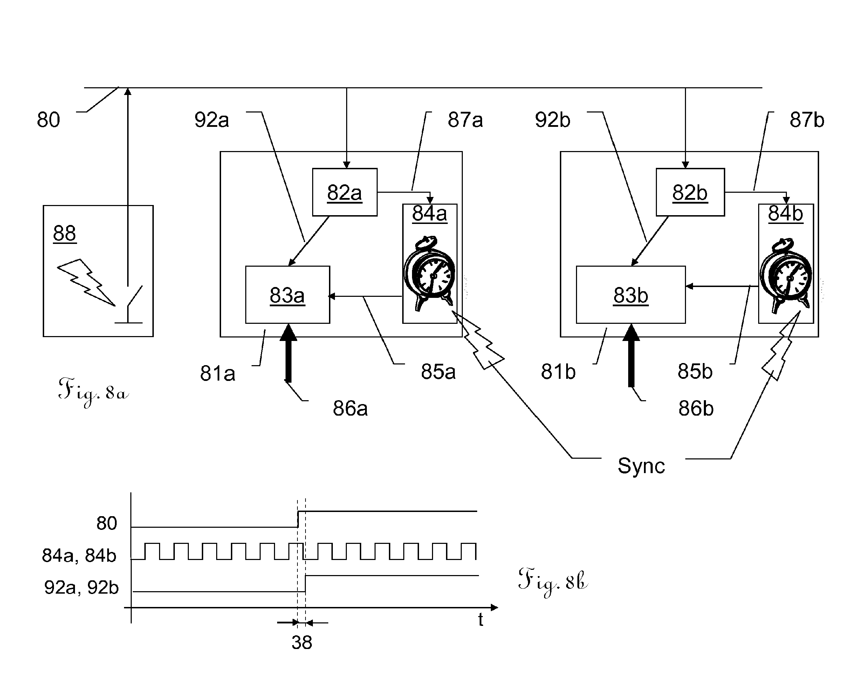

Die Darstellung von Figur 8a zeigt dasselbe System wie zuvor, jedoch sind nun erfindungsgemäß die beiden lokalen Taktgeber 74a und 74b zueinander synchronisiert. Dies kann beispielsweise nach einer der zuvor ausführlich beschriebenen Methode geschehen.

Die Signale in Figur 8b zeigen deutlich, dass nunmehr kein (bzw. ein um Größenordnungen geringerer) Zeitversatz der lokalen Triggerzeitpunkte 92a und 92b auftritt, da alle Teilsysteme das Triggersignal 80 mit den synchronen Taktsignalen 85a bzw. 85b abtasten und die Messwerte 86a und 86b somit in jedem Teilsystem 81a und 81b mit einem hohen Maß an Gleichzeitigkeit erfasst werden. Die verbleibende Latenz 38 kann darüber hinaus zusammen mit weiteren Latenzen im System mit Hilfe von Interpolation oder Extrapolation kompensiert werden. Die Latenz ist bestimmbar und kann gemessen werden, beispielsweise mit Hilfe eines höheren Taktes in zumindest einem der Teilsysteme, wie etwa einer ebenfalls Taktsynchronisierten Steuereinheit zur Messauswertung und weiteren Verarbeitung. Insbesondere kann die Steuereinheit als "Master" der Synchronisation fungieren. Jedenfalls sind der Steuereinheit die Frequenzen und die Phasenlagen der lokalen Takte 84a/b bekannt.

Die jeweils simultanen Signale 84a,84b bzw. 92a,92b sind in den Diagrammen aufgrund ihrer erfindungsgemäßen Synchronität nur einmal dargestellt aber mit mehreren Bezugszeichen beschriftet.

Die zeitliche Synchronisation der Taktsignale 85a/b der Taktgeber 84a/b mit dem Synchronisationssignal 87a/b kann hierbei anhand einer der zuvor beschriebenen Methoden erfolgen.

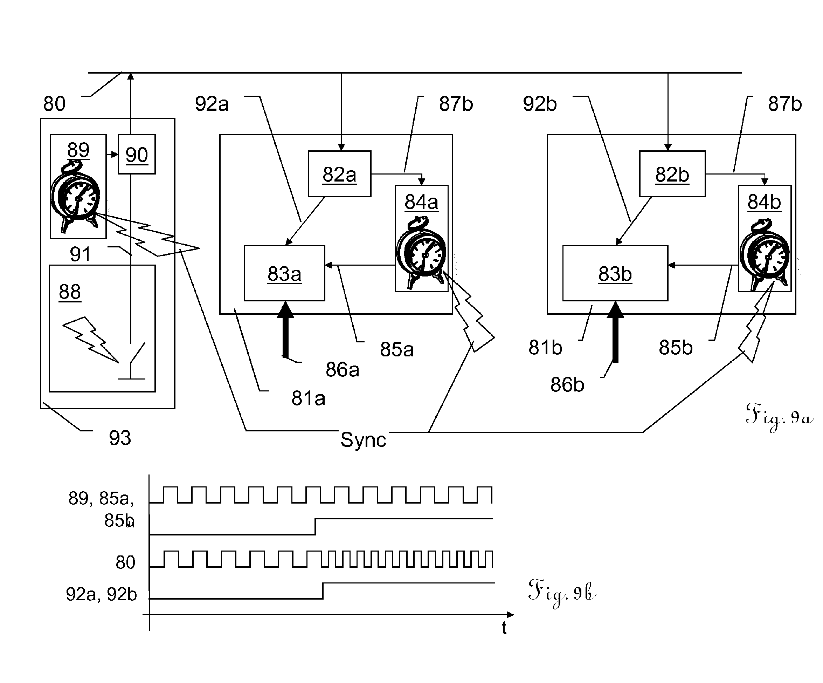

Eine weitere Ausführungsform ist in Figur 9a dargestellt, welche ebenfalls synchronisierte Taktsignale 84a und 84b aufweist, zu welchen nun weiters noch der Taktgeber 89 des, als Triggersystem bezeichneten Teilsystems 93 synchronisiert ist. In dieser Ausführung, deren Signale in Fig. 9b dargestellt sind, wird das asynchrone Triggersignal 91 des Auslösers 88 in der als Takt-Trigger-Modulator bezeichneten Einheit 90 mit dem Taktsignal 89 zeitlich quantisiert zu einem synchronen Triggersignal. Der Takt-Trigger-Modulator 90 stellt nun sowohl das synchrone Triggersignal, wie auch das Synchronisationssignal als kombiniertes Takt-Trigger-Signal 80 den anderen Teilsystemen 81a/b bereit.

In den Teilsystemen 81a/b wir das Takt-Trigger-Signal 80 in dem, als Takt-Trigger-Demodulator bezeichneten, Funktionsblock 82a/b, in ein lokales Synchronisationssignal 87a/b und ein lokales Triggersignal 92a/b aufgeteilt. Das lokales Synchronisationssignal 87a/b wird nun zur Synchronisation der lokalen Takteinheit 84a/b bzw. des von diesem erzeugten lokalen Taktsignals 85a/b verwendet. Somit ist sichergestellt das die Takteinheiten 89, 84a und 84b jeweils bis auf einen eventuell vorhandenen, sehr geringen Phasenjitter zueinander simultan sind.

Das lokale Triggersignal 92a/b, welches bereits synchron zu den Taktsignalen 84a, 84b und 89 ist weist somit beim Auslösen der Messwerterfassung in den jeweiligen Latcheinheiten 83a/b nur mehr einen sehr geringen zeitlichen Jitter gegenüber den anderen Teilmesssystemen auf.

In einer weiterführenden Ausführungsform sind auch verschiedenste Formen einer Sub-Sampling-Interpolation möglich, bei welchen anhand einer hochauflösenden Zeitquantisierung des Triggersignals mit einer Taktrate, welche höher als die lokale Taktsignale der Erfassung ist, ein hochaufgelöster Zeitpunkt der Triggerung zwischen der Erfassung zweier Messwerten bestimmbar ist. Somit ist anhand eines Interpolationsverfahrens ein interpolierter Messwert, welcher zum hochaufgelösten Zeitpunkt zwischen den tatsächlich erfassten Messwerten liegt, ermittelbar, wobei optional auch zudem eine allenfalls vorhandene Latenzzeit kompensiert werden kann.

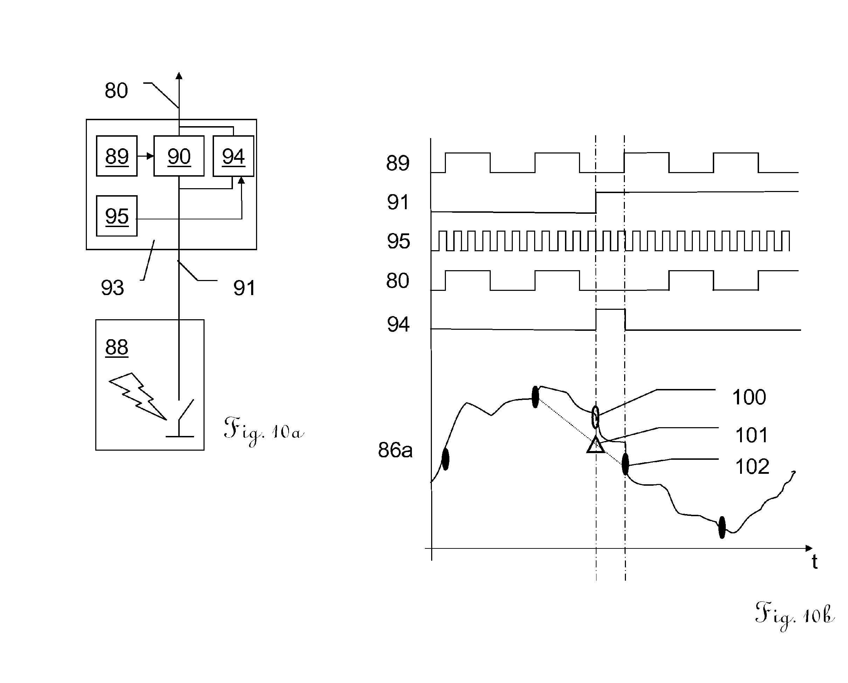

Die Figur 10a zeigt eine solche Interpolation. Die Triggereinheit 93 stellt hierbei eine hochauflösende Sub-Sample-Zeitinformation mit dem Zeitgeber 95 bereit, auf deren Basis eine Interpolation der Messwerte durchführbar ist. Dabei bestimmt die als Sub-Sample-Timer bezeichnete Einheit 94 die Zeitdifferenz zwischen dem asynchronen Triggersignal 91 und der synchronisierten Triggerinformation des Takt-Trigger-Signals 80 in hochauflösenden Zeiteinheiten. Dies kann beispielsweise digital anhand eines hochfrequenten Zählers oder auch analog bspw. durch eine Spannungsrampe geschehen. Die so ermittelte Sub-Sample-Zeitinformation kann dann zu einer Inter- oder Extrapolation der aufgezeichneten Messwerte herangezogen werden.

Die Figur 10b zeigt Zeitdiagramme einer solchen Interpolation. Hierbei wird die Zeitdauer zwischen dem Triggersignal 91 und dem mit der Flanke des Taktsignals 89 synchronisierten Triggersignals als Breite des Pulses 94 dargestellt. Diese Breite wird durch ein schnelleres Taktsignal des Taktgebers 95 bestimmt, in diesem Fall beispielsweise zu vier Flanken des Taktgebers 95. Das synchronisierte Triggersignal wird den Teilsystemen in diesem Beispiel als Takt-Trigger-Signal 80 mit einer Phasenmodulation bereitgestellt.

Das Reale Messsignal 86a wird mit der steigenden Flanke des Taktsignals 89 zu Messwerten abgetastet, wie dies durch die schwarzen Punkte dargestellt ist. Die Messwerte werden beispielsweise, wie durch die punktierte Linie dargestellt, linear interpoliert. Dadurch, und zusammen mit der Sub-Sample-Zeitinformation von 94 kann der tatsächlich aufgenommen Messwert 102 zu einem Wert 101 der linearen Interpolation verbessert werden, welcher dem tatsächlichen Wert 100 des Signals deutlich angenähert ist. Insbesondere, wenn die Bandbreite des Messsignals kleiner als die halbe Abtastrate ist, kann mit Hilfe der Interpolation der Messwert zum Triggerzeitpunkt sehr exakt ermittelt werden. Wenn bekannt, kann eine Interpolation nach einer Funktion, welche das physikalische Modell des Messwerts und/oder dessen zeitlichen Ableitungen darstellt, zu einer weiteren Erhöhung der Genauigkeit führen. Zur Interpolation oder Extrapolation kann neben einer einfachen linearen Funktion auch eine an dem physikalischen Modell des gemessenen Systems orientierte Funktion höherer Ordnung oder auch eine entsprechende differenzielle Funktion herangezogen werden.

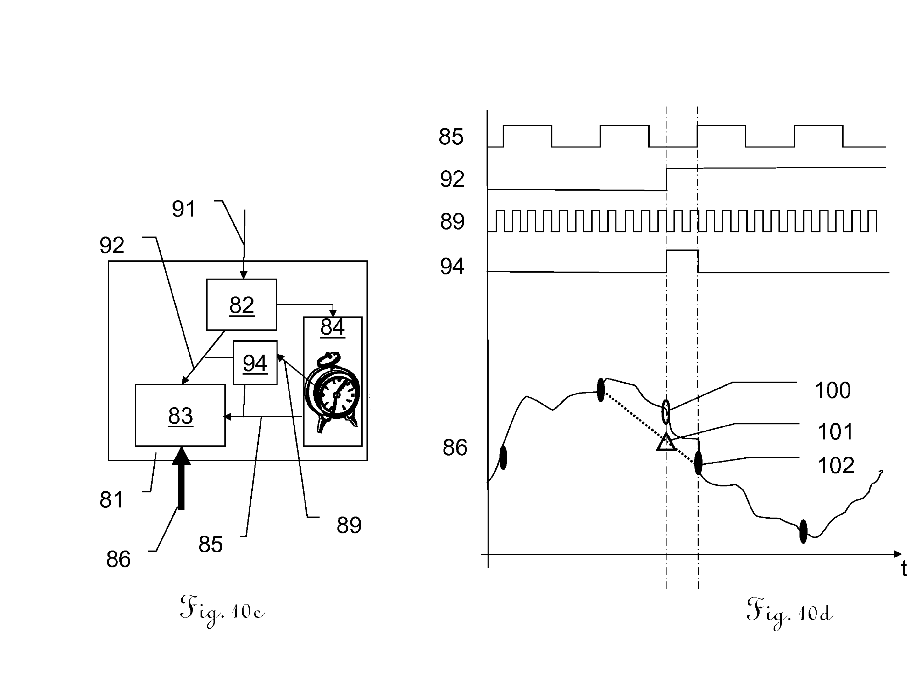

Alternativ zur Bereitstellung der Sub-Sample-Zeitinformation durch die Triggereinheit 93 kann der interpolierte Messwert auch direkt in der Messeinheit 81 bestimmt und von dieser bereitgestellt werden, wie dies Fig. 10c darstellt. Dabei erzeugt der synchronisierte Taktgeber 84 (oder ein eigens dafür vorgesehener Taktgeber) einen Sub-Sample-Takt 89 mit einer höheren Frequenz als das jener des synchronisierten Taktsignals, mit dessen Hilfe die Sub-Sampling-Einheit 94 die zeitliche Differenz zwischen der den Messwert erfassenden Taktflanke des Taktsignals 85 und dem asynchronen Triggersignal 92 bestimmt wird. Eine hier nicht dargestellte Datenverarbeitungseinheit kann daraus eine Signalinterpolation vornehmen, wie dies beispielhaft zuvor anhand einer linearen Interpolation beschrieben wurde.

In einer weiteren Ausgestaltung messen die Teilsysteme kontinuierlich mit einer konstanten Taktrate und erhalten von der Triggereinheit einen Zeitstempel der Auslösung der Messung übermittelt, welcher den Auslösezeitpunkt hochgenau, vorzugsweise in einer Sub-Taktraten-Auflösung, enthält. Durch die erfindungsgemäße Taktsynchronisation hat der Zeitstempel eine fixe und bekannte Relation zu den lokalen Zeitstempeln der Messwerterfassungen der Teilmesssysteme. Somit kann auf Basis der Zeitstempelinformation jedes Teilsystem einen Messwert zum Triggerzeitpunkt bestimmen. Dieses Bestimmen kann durch ein Auslesen eines - dem Zeitstempel zugehörigen - Messwertes aus einer gespeicherten Historie von Messwerten erfolgen. Auch kann ein Interpolieren von mehreren der gespeicherten Messwerte um den, durch den Zeitstempel bekannt gegebenen, Auslösezeitpunkt zur Bestimmung des ermittelten Messwertes herangezogen werden. Die Speicherung kann dabei auch zeitlich begrenzt, beispielsweise in Form eines Ringpuffers erfolgen.

Die entsprechenden Zeitverläufe der Signale sind in Fig. 10d dargestellt.

Es versteht sich, dass obige Ausführungen auch auf eine beliebige Anzahl von Teilsystemen ausgedehnt werden kann.

Auch können den Teilsystemen hierbei unterschiedliche Aufgaben, wie Triggerung, Messwerterfassung, Interpolation, Messwertauswertung, Steuerung mit einem elektronischen Controllersystem sowie auch Kombinationen von diesen zugeordnet sein.

## Patentansprüche

1. Ein Verfahren zur hochpräzisen zeitlichen Synchronisierung von Messwerterfassungen in einem Messsystem mit mehreren, insbesondere räumlich verteilten, Teilmesseinheiten mit:
■ Signalisieren eines Zeitpunkts zur Auslösung der Messwerterfassung durch ein Triggersignal (10), und
■ jeweiliges Erfassen und Zwischenspeichern eines Messwerts in der Teilmesseinheit zu dem durch das Triggersignal (10) bestimmten Zeitpunkt,
wobei das Erfassen des Messwerts, in den Teilmesseinheiten jeweils zeitquantifiziert mit einem lokalen Taktsignal (11,13) der Teilmesseinheit durchgeführt wird,
**gekennzeichnet durch**
ein Synchronisieren der lokalen Taktsignale (11,13) der Teilmesseinheiten, insbesondere ein Phasen-Synchronisieren, **durch** ein Synchronisationssignal (19) zur Sicherstellung einer Gleichzeitigkeit des Erfassens des Messwerts in den Teilmesseinheiten mit einer zeitlichen Unsicherheit, welche einen Phasen-Jittern des Synchronisierens nicht übersteigt und jedenfalls geringer als 90 % einer Periodendauer des lokalen Taktsignals ist, insbesondere geringer als eine halbe Periodendauer, vorzugsweise geringer als ein fünftel der Periodendauer.

2. Das Verfahren nach Anspruch 1, **dadurch gekennzeichnet, dass**
das Messsystem ein Raum-Koordinatenmessgerät (40,50,60) ist, insbesondere wobei
das Signalisieren mit einem Messtaster (55,63) und
das Erfassen mit
Positionswertgebern (41,42,51,52,66X,66Y,66Z) erfolgt.

3. Das Verfahren nach einem der Ansprüche 1 oder 2,
**gekennzeichnet durch**
eine Bereitstellen des Synchronisationssignals und eines weiteren Signals als gemeinsames
Signal (20,120,220,320,420,520,620).

4. Das Verfahren nach Anspruch 3, **dadurch gekennzeichnet, dass**
das Bereitstellen als gemeinsames
Signal (20,120,220,320,420,520,620) unter Verwendung eines Modulationsverfahrens derart geschieht, dass aus dem gemeinsamen Signal die entsprechenden Komponenten rekonstruierbar sind, insbesondere wobei das Modulationsverfahren in Form eines FSK, PSK, ASK oder QAM ausgeführt wird.

5. Das Verfahren nach Anspruch 4, **dadurch gekennzeichnet, dass**
das Modulationsverfahren als digitales Modulationsverfahren, insbesondere in Form einer logischen Verknüpfung des Synchronisationssignals und des weiteren Signals ausgeführt wird.

6. Das Verfahren nach Anspruch 3, **dadurch gekennzeichnet, dass**
das Bereitstellen als gemeinsames
Signal (20,120,220,320,420,520,620) unter Verwendung einer Leitungscodierung erfolgt, mittels welcher die lokalen Taktsignale synchronisierbar sind, vorzugsweise einer Leitungscodierung in Form eines Manchester-Codes.

7. Das Verfahren nach einem der Ansprüche 3 bis 6, **dadurch gekennzeichnet, dass**
das Bereitstellen des Synchronisationssignals (19) und des Triggersignals (10) als weiteres Signal mittels eines kombinierten Takt-Trigger-Signals erfolgt, insbesondere wobei das kombinierte Takt-Trigger-Signal über eine einzige Signalleitung übertragen wird.

8. Das Verfahren nach einem der Ansprüche 3 bis 6, **dadurch gekennzeichnet, dass** das Bereitstellen des Synchronisationssignals (19) über ein Versorgungssignal als weiteres Signal mittels einer versorgungsspannungsführenden Leitung als kombiniertes Takt-Versorgungs-Signal erfolgt.

9. Das Verfahren nach einem der Ansprüche 3 bis 6, **dadurch gekennzeichnet, dass** das Bereitstellen des Synchronisationssignals (19) und eines Datensignals als weiteres Signal über eine gemeinsame Signalleitung als kombiniertes Takt-Daten-Signal erfolgt.

10. Das Verfahren nach einem der Ansprüche 3 bis 9,
**dadurch gekennzeichnet, dass**
das Bereitstellen des Triggersignals (10) an die Teilmesseinheiten als synchrones Triggersignal erfolgt, wobei das Triggersignal in einer Teileinheit als Triggereinheit mit dem synchronisierten Taktsignal zeitquantisiert wird und als synchronisiertes Triggersignal den Teilmesseinheiten bereitgestellt wird.

11. Das Verfahren nach einem der Ansprüche 3 bis 9,
**dadurch gekennzeichnet, dass**
das Bereitstellen des Triggersignals (10) an die Teilmesseinheiten als asynchrones Triggersignal erfolgt, welches jeweils in den Teilmesseinheiten mit dem synchronisierten lokalen Taktsignal zeitquantisiert wird.

12. Das Verfahren nach einem der Ansprüche 1 bis 11,
**dadurch gekennzeichnet, dass**
das Synchronisieren des jeweiligen lokalen Taktsignals (11,13) unter Verwendung einer Rückgekoppelten Regelschleife, vorzugsweise einem PLL oder einem modifizierten Costas Loop, aus dem Synchronisationssignal erfolgt, insbesondere wobei das Synchronisationssignal ein Vielfaches der Zykluszeit des daraus generierten lokalen Taktsignals aufweist.

13. Das Verfahren nach einem der Ansprüche 1 bis 12,
**dadurch gekennzeichnet, dass**
das lokale Taktsignal einen konstanten, frei wählbaren Phasenversatz gegenüber dem Synchronisationssignal als Latenzzeitkompensation zur Kompensation einer Signallaufzeit aufgrund von Leitungslängen und schaltungstechnischen Verzögerungen aufweist, insbesondere wobei der frei wählbare Phasenversatz durch das Messsystem automatisch, anhand der vom Messsystem automatisch ermittelbaren Signallaufzeiten und Verzögerungen zwischen den Teilmesssystemen konfiguriert wird.

14. Das Verfahren nach einem der Ansprüche 1 bis 13,
**dadurch gekennzeichnet, dass**
■ die Teileinheiten mit ihrer synchronisierten lokalen Taktsignalen kontinuierlich die Messwerte erfassen und eine, vorzugsweise zeitlich begrenzte, Historie der Messwerte speichern,
■ das Signalisieren des Zeitpunkts der Auslösung durch ein Verteilen von, den Triggerzeitpunkt definierenden, Zeitstempeln erfolgt und
■ die Auslösung der Erfassung der Messwerte durch auslesen eines, dem durch den Zeitstempel definierten Zeitpunkt zugehörigen, Messwerts erfolgt, insbesondere wobei in den Teileinheiten die kontinuierlich erfassten Messwerte auf den - optional um eine Latenzzeit verschobenen - Zeitpunkt des Zeitstempels rechnerisch interpoliert oder extrapoliert und als ermittelten Messwert zum Triggerzeitpunkt bereitstellt.

15. Ein triggerbares Messsystem, insbesondere Koordinatenmesssystem, mit mehreren, insbesondere räumlich verteilten, Teilmesseinheiten mit
■ einem Messwerteingang zur Erfassung einer physikalischen Grösse als Messwert,
■ einem Triggersignaleingang zur Auslösung der Messwerterfassung zu einem durch ein Triggersignal bestimmten Zeitpunkt und
■ einem lokalen Taktsignal zur zeitquantifizierten, teilmesssystem internen Signalverarbeitung der Messwerterfassung,
**gekennzeichnet durch**
eine Synchronisationseinheit zur Synchronisierung der lokalen Taktsignale in den Teilmesseinheiten des Messsystems anhand eines Synchronisationssignals, insbesondere wobei das Synchronisationssignal gemeinsam mit einem weiteren Signal über eine gemeinsame Signalleitung übertragen wird, vorzugsweise wobei das Synchronisationssignal gemeinsam mit dem Triggersignal als kombiniertes Takt-Trigger-Signal im Messsystem übertragen wird.
